# EUROPEAN PATENT SPECIFICATION

(11) **EP 2 009 875 B1**
(45) Date of publication and mention of the grant of the patent: **18.11.2009**
(21) Application number: 07290821.3
(22) Date of filing: 29.06.2007
(51) Int. Cl.: H04L 29/08, H04L 12/56

(54) **Method of providing a grid network application over a transport network**
Verfahren zur Bereitstellung einer Gitternetzwerkanwendung über ein Transportnetzwerk
Procédé pour fournir une application de réseau d'entretoisage sur un réseau de transport

(43) Date of publication of application: 31.12.2008
(73) Proprietor: Alcatel Lucent, 75008 Paris (FR)
(72) Inventor: Verchere, Dominique, 91650 Breuillet (FR); Audouin, Olivier, 02130 Issy Les Moulineaux (FR); Douville, Richard, 91310 Longpont sur Orge (FR)
(74) Representative: Schmidt, Werner Karl

(56) References cited:
- US-A1- 2004 064 558
- US-B1- 6 463 454

## Description

The present invention relates to a method of providing a grid network application over a transport network, wherein transport network resources of said transport network are reserved, particularly for transporting data between grid network members, and wherein grid network resources for said grid network application are reserved.

Computer grid networks are per se known and rely on an aggregation of computational resources, storage resources or further resources which are provided by a plurality of distributed grid network members.

Existing grid application architectures are usually implemented within enterprise networks and are overlaid on top of transport networks which are used for data exchange between the grid network members. In contrast to the grid network applications, which operate on layer 7, i.e. the application layer, of the ISO/OSI reference model, the underlying transport networks usually represent systems operating on layer 1 to 3 of the ISO/OSI reference model.

Depending on the type of grid network application, such as computing or storage or the like, the respective grid application signaling control functions may take different forms which relate to the specifics of the resource pools that are provided by the grid network members and which are to be reserved, allocated and used during grid network application sessions as required by users of the grid network.

The major disadvantage of the existing systems and methods is based on the functional separation of the grid application architecture and the underlying transport network which operate independently of each other.

Up to now, interactions between the grid application and the underlying transport network are only possible through a dedicated protocol gateway which at best enables loose signaling control interactions. However, in order to establish a grid network application session, the prior art systems require the definition of at least two separate signaling sessions, wherein one signaling session deals with the reservation of grid network resources and a further signaling session deals with the reservation of an end-to-end network signaling session, see eg US 6 463 454.

It is therefore an object of the present invention to provide an improved method of providing a grid network application over a transport network which offers a simplified and efficient process of establishing grid network application sessions.

According to the present invention, this object is achieved by using the same protocol for said step of reserving transport network resources and said step of reserving grid network resources.

The inventive concept of using the same protocol for the reservation of both transport network resources and grid network resources advantageously avoids the uncoordinated signaling approach of the prior art systems. By using the same protocol for both reservation processes, the corresponding resources may optimally be provisioned as required for the grid network application, particularly without requiring to set up a plurality of different signaling sessions. Most important, the inventive solution enables to provision the grid network resources and transport network resources relied upon by the grid network application at the same time. I.e., each grid network application session benefits from the optimised reservation of resources according to the present invention. The inventive solution further advantageously enables close control interactions from grid network application control functions to the transport network functions.

According to an advantageous embodiment of the present invention, an existing transport network signaling protocol is used for reserving said transport network resources and said grid network resources. This embodiment is particularly advantageous since it does neither require to define a new architecture for the grid network applications nor to define new operation sequences for the resource allocation because existing signaling schemes of the transport network signaling protocol are relied upon.

According to a further embodiment of the inventive method, the transport network signaling protocol is selected from a) a resource reservation protocol, RSVP, particularly RSVP-TE, and b) a label distribution protocol, LDP, particularly constraint-based label distribution protocol, CR-LDP.

To optimally adapt the existing transport network signaling protocols for the inventive usage, a further embodiment of the method according to the present invention proposes to modify at least one message of said protocol depending on the type of grid network resources to be reserved.

Preferably, said step of modifying comprises adding one or more objects to said message(s) of the existing transport network signaling protocols which denote the type and/or further characteristics of the grid network resources to be reserved for said grid network application.

In order to improve the scalability of the inventive method, resource management functions of the grid network applications my be separated according to the specific type of resource, and respective signaling functions for these types may be uniformed thus enabling an efficient resource reservation even in such cases where a plurality of different grid network resources is to be allocated. The resource types may e.g. comprise
a) networks comprising properties such as ports, wavelength, bandwidth, type of switching,
b) storage systems comprising properties such as ports, storage space, type of storage medium,
c) computer systems comprising properties such as ports, processor speed, type of CPU,
or further types such as memory link interfaces which may be employed in grid network application architectures.

A further very advantageous embodiment of the present invention is characterized in that said transport network resources of said transport network are reserved depending on the grid network resources which are to be reserved for said grid network application. In contrast to the prior art systems which have no correlation between a status of the grid network application and the status of the underlying transport network, the inventive solution enables to perform cross-optimisation functions which regard both classes of resources, i.e. the grid network resources as well as the transport network resources.

Particularly, this embodiment of the present invention enables to perform cross-layer resource allocations wherein the transport network resources may e.g. be reserved depending on an amount of grid network resources requested by the grid network application.

Yet another advantageous embodiment of the method according to the present invention proposes to dynamically adapt the usage of transport network resources during a grid network application session, in particular depending on current grid network application resource requirements.

The implementation efforts required by the inventive idea are very limited, because only few modifications of the existing transport network signaling protocols have to be made.

Furthermore, when using RSVP or LDP as reservation protocol for the inventive method, full backward compatibility is maintained, because these protocols provide for ignoring unknown format objects within signaling controllers that evaluate protocol messages that have been modified to comprise the inventive grid network resource reservation information. Such inventive format objects will remain unmodified by prior art signaling controllers and will be forwarded to a respective grid network member which is able to evaluate it.

The modularity and scalability of RSVP and LPD, particularly CR-LDP, enable to deploy the inventive solution on existing network control planes utilizing RSVP or LPD without the necessity to upgrade all network element controllers.

The inventive method advantageously enables to uniformly and efficiently operate grid network applications such as grid computing networks, data centers, storage area networks while at the same time reducing operational expenditures, because only one single type of control network is needed in contrast to the prior art systems.

The single control network required by the method according to the present invention jointly handles grid network application resources and transport network resources and also leads to an improved coordination of the distributed resources of the grid network.

Yet another very advantageous embodiment of the present invention is characterized in that state information related to a grid network member attached to said transport network is distributed, in particular flooded, over said transport network. This aspect of the present invention advantageously enables to efficiently spread status information of grid network members throughout the whole transport network. Thereby, a more efficient use of grid network members which are actually reachable via the transport network is possible.

For instance, if several storage systems are connected to the transport network which may be used within a grid network application session, the inventive distribution of information related to said storage systems enables to coordinate the usage of storage space.

The state information generally depends on the type of grid network member device. For example, regarding storage devices, the state information may comprise a total capacity (i.e. the total number of bytes that may be stored), an available capacity (i.e. the number of free bytes), physical security and protection capabilities, the availability of internal data recovery mechanisms, and the like.

Advantageously, according to a further embodiment of the present invention, said state information is stored in grid network members and/or further network elements of said transport network, particularly in routers of said transport network. These network elements may thus build state databases from the state information which they have received after it has been distributed over the network according to the inventive principle.

From the state information that is comprised within such a state database, service tables may be compiled which present the state information in a predetermined format such as a format that enables a simple selection of the involved grid network members offering the respective services such as storage services and the like.

In order to improve the reliability of the inventive state information distribution process, acknowledgement procedures may be introduced to verify the correct transmission of state information.

Constraint-based provisioning of services can also be offered according to a further embodiment of the present invention. In this variant, the selection of i.e. storage servers or computing servers may be subject to various constraints on the attributes of the storage servers or computing servers that may satisfy a user request.

Network elements storing the distributed state information may also determine a network wide service configuration and monitor this configuration in order be able to detect and react to changes therein, i.e. by rebuilding the network wide service configuration.

The inventive distribution of state information may be controlled by corresponding protocol engines which are implemented in the respective network elements. The protocol engines may e.g. be implemented within router controllers.

Instead of distributing a single set of state information, a plurality of such sets may also distributed within one transmission.

The collected state information may also be used to build tree structures comprising the respective information organized according to predetermined criteria which may comprise parts of the state information itself such as a storage capacity or the like or network related information such as a network address associated with the respective grid network member.

A further advantageous embodiment of the present invention proposes to extend an existing routing protocol such as an OSPF (open shortest path first) - based protocol in order to enable the inventive advertising, i.e. distributing of the state information. For details regarding OSPF cf. IETF RFC 2328.

Further solutions to the object of the present invention are given by a network element according to claim 11 and a transport network according to claim 13.

Further advantages and features of the present invention are described in the following detailed description with reference to the drawings in which:
- Fig. 1: shows a simplified block diagram of an inventive network architecture supporting network grid applications, and
- Fig. 2: shows a typical scenario employing a second embodiment of the inventive method.

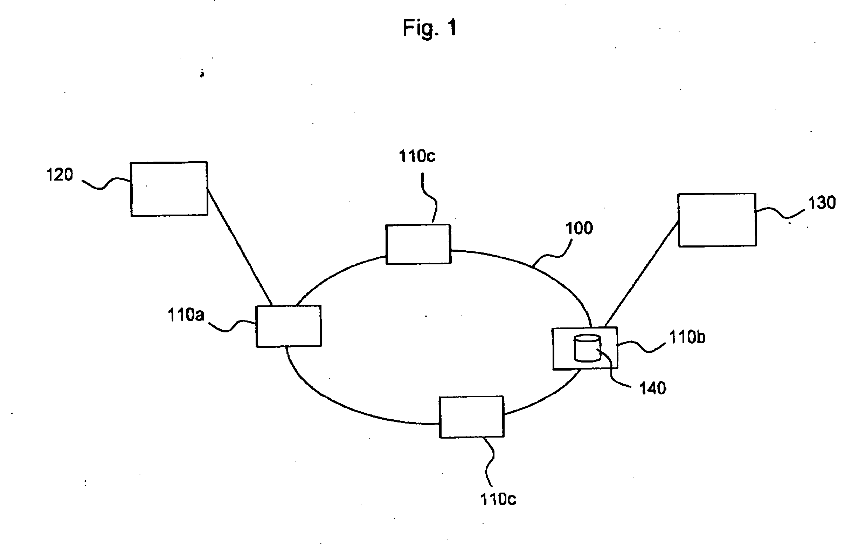

Figure 1 depicts a network architecture comprising a transport network 100 which is used for a data exchange between various grid network members 120, 130.

In the present example, the grid network member 120 represents an application server controlling a grid network application and providing corresponding services to a user. The further grid network member 130 represents a storage system which is located remote from the application server 120.

The transport network 100 comprises a plurality of edge routers 110a, 110b via which said grid network members 120, 130 are connected with the transport network 100. Correspondingly, the storage system 130 can be reached by the application server 120 via the transport network 100 and the edge routers 110a, 110b.

The network architecture according to Figure 1 may comprise further grid network members, which are currently not depicted for the sake of simplicity and which may be connected to the transport network 100 via further edge routers 110c.

In order to efficiently establish a grid network application session, which in the present example requires both the reservation of the storage resources provided by the storage system 130 and the reservation of corresponding resources of the transport network 100 in order to enable a data exchange between the grid network members 120, 130, the method according to the present invention provides for using the same protocol for the step of reserving transport network resources and the step of reserving grid network resources, i.e. the storage resources of the storage system 130.

That is, in contrast to the prior art systems, the inventive method does not require two separate, uncoordinated signaling procedures to reserve all the grid application and transport network resources necessary for initiating a grid network application session. The inventive method rather uses one single, existing transport network signaling protocol for reserving both classes of resources.

Apart from saving respective resources of the transport network 100, the inventive method thus enables to perform cross-layer optimizations which focus on allocating transport network resources depending on a current operational status of the grid network application session. I.e., if the current grid network application session controlled by the application server 120 will temporarily require a larger data transfer rate for data transmissions between the storage system 130 or a further grid network member and the application server 120, corresponding network resources within the transport network 100 may be reserved.

As a further example, if a specific amount of grid network resources is reserved for a grid network application session, the inventive method allows for automatically reserving such an amount of resources of the transport network 100 as will be required for the respective grid network application session.

The inventive method preferably uses existing protocols such as RSVP or LDP for reserving both classes of resources (grid network / transport network). The further description focuses on using RSVP.

According to an advantageous embodiment of the present invention, the RSVP is extended to allow for the inventive reservation of grid network resources. Said extension comprises adding one or more objects to certain RSVP messages which denote the type and/or further characteristics of the grid network resources to be reserved for said grid network application.

A first object defines the storage characteristics which are required by the user of the grid network storage application presently referred to. This first object is implemented within the RSVP Path message, which is used as a message indicating a storage request by the application server 120.

A second object defines the storage resources that have been reserved by the receiver of the storage request, i.e. presently the storage system 130. This second object is implemented within the RSVP Resv message, which is used as a message indicating a reservation of requested resources.

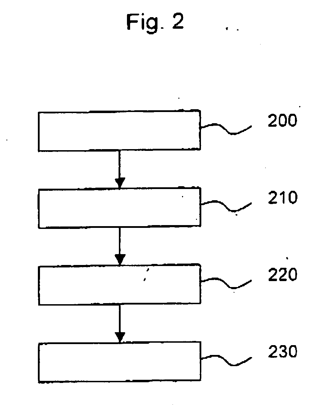

Based on the inventive implementation of the aforementioned objects within the RSVP Path and RSVP Resv message, the establishment of a grid network application session according to the present invention comprises the following sequence of steps, which is illustrated by Figure 2.

In the first step 200, an RSVP Path message is defined at the application server 120 and extended as described above by adding the first object which defines the storage characteristics which are required by the user of the grid network storage application.

The RSVP Path message may also receive, as a third object, further additional information in the form of a "storage label request" tag that may later on be used to refer to the storage resources requested by the present RSVP Path message in the sense of a label switching architecture, cf. e.g. IETF, internet engineering task force, RFC 3031 and RFC 3945 referring to (generalized) multi-protocol label switching, (G)MPLS.

Generally, further label tags or objects may be defined for signaling the resources dealt with in the grid network. Such labels may be used to denote different grid network resources to be allocated which may e.g. comprise
a) networks comprising properties such as ports, wavelength, bandwidth, type of switching,
b) storage systems comprising properties such as ports, storage space, type of storage medium,
c) computer systems comprising properties such as ports, processor speed, type of CPU,
or further types such as memory link interfaces which may be employed in grid network application architectures.

In the second step 210 of the inventive procedure, the RSVP Path message that has been defined within step 200 is transmitted from the application server 120 to the storage system 130 via the transport network 100 and the edge routers 110a, 110b.

Subsequently, in step 220, the RSVP Path message is received at the storage system 130 and evaluated.

In response to the inventive RSVP Path message received within step 220, the storage system 130 defines a RSVP Resv message of the above explained type. This RSVP Resv message additionally comprises a storage label tag which denotes the type of storage device that has been reserved and which thus complements the "storage label request" tag of the RSVP Path message. The RSVP Resv message is then transmitted from the storage system 130 to the application server 120 via the transport network 100 and the edge routers 110a, 110b, cf. step 230 of Figure 2.

After receiving the RSVP Resv message within the application server 120, the grid network application session has successfully been established. Advantageously, by extending the RSVP in the above described manner, both the reservation of transport network resources and grid network resources has been accomplished by the described sequence of the steps 200 to 230, i.e. no further, separate signaling is required to complete the process of establishing the grid network application session.

Since RSVP is a soft-state protocol, the above described RSVP messages may be required to be repeated periodically, i.e. refreshed, to prevent the reservations from being deleted due to a timeout. Preferably, a refresh timer value for the established grid network application session is chosen to be greater than or equal to a refresh timer value for the transport network 100.

Advantageously, the inventive method offers full backward compatibility with prior art systems capable of RSVP, because these protocols provide for ignoring unknown format objects. Thus, should a conventional signaling controller evaluate protocol messages that have been modified to comprise the inventive grid network resource reservation information, the inventive format objects will remain unmodified and will be forwarded to a respective grid network member which is able to evaluate it.

A further advantageous embodiment of the present invention is characterized in that state information related to a grid network member 130 attached to said transport network 100 is distributed over said transport network 100 by means of a per se known flooding operation. The inventive flooding enables to efficiently spread status information of grid network members 130 throughout the whole transport network 100. Thereby, a more efficient use of grid network members 130 which are actually reachable via the transport network 100 is possible.

For instance, if a plurality of storage systems such as the storage system 130 is connected to the transport network 100, the inventive distribution of information related to said storage systems enables to coordinate the usage of storage space within the network 100.

Evidently, the state information to be distributed generally depends on the type of grid network member device. For example, regarding storage devices, the state information may comprise a total capacity (i.e. the total number of bytes that may be stored), an available capacity (i.e. the number of free bytes), physical security and protection capabilities, the availability of internal data recovery mechanisms, and the like. Regarding computer systems, the state information may comprise ports, processor speed, type of CPU, and the like.

Advantageously, according to a further embodiment of the present invention, said state information is stored in grid network members 120, 130 and/or further network elements of said transport network 100, particularly in the edge routers 110a, 110b, 110c. These network elements may thus build state databases from the state information which they have received after is has been distributed over the transport network 100 according to the inventive principle. An exemplary state database 140, which inter alia comprises state information related to said storage system 130, is comprised within the edge router 110b as depicted by Figure 1.

From the state information that is comprised within such a state database 140, service tables may be compiled which present the state information in a predetermined format such as a format that enables a simple selection of the involved grid network members 130 offering the respective services such as storage services and the like.

In order to improve the reliability of the inventive state information distribution process, acknowledgement procedures may be introduced to verify the correct transmission of state information.

Constraint-based provisioning of services can also be offered according to a further embodiment of the present invention. In this variant, the selection of i.e. storage servers 130 or computing servers may be subject to various constraints on the attributes of the storage servers or computing servers that may possibly be able to satisfy a user request.

Network elements 110b storing the distributed state information may also determine a network wide service configuration and monitor this configuration in order be able to detect and react to changes therein, i.e. by rebuilding the network wide service configuration.

The inventive distribution of state information may be controlled by corresponding protocol engines (not shown) which are implemented in the respective network elements 110b, 130. The protocol engines may e.g. be implemented within router controllers.

Instead of only distributing a single set of state information, a plurality of such sets or even the whole contents of a state database 140 may also distributed within one or more transmission.

The collected state information may also be used to build tree structures or other forms of data representation comprising the respective information organized according to predetermined criteria which may comprise parts of the state information itself such as a storage capacity or the like or network related information such as a network address associated with the respective grid network member 130.

A further advantageous embodiment of the present invention proposes to extend an existing routing protocol such as an OSPF (open shortest path first) - based protocol in order to enable the inventive advertising, i.e. distributing of the state information. For details regarding OSPF cf. IETF RFC 2328.

Upon receiving a service request from a user, the network element 110b provided with the inventive state database 140 selects one or more appropriate grid network members 130 and corresponding network routes to said grid network members 130 in response to said service request and forwards the response to the user.

The combination of the inventive resource reservation using one single protocol and the inventive distribution of state information is particularly advantageous since it enables an efficient determination of available grid network services based on the distributed state information and, subsequently, also an efficient establishing of a grid network application session during which the previously determined grid network services are utilized.

## Claims

1. Method of providing a grid network application over a transport network (100), wherein transport network resources of said transport network (100) are reserved, particularly for transporting data between grid network members (120, 130), and wherein grid network resources for said grid network application are reserved, **characterized by** using the same protocol for said step of reserving transport network resources and said step of reserving grid network resources.

2. Method according to claim 1, **characterized in that** a transport network signaling protocol is used for reserving said transport network resources and said grid network resources.

3. Method according to claim 2, wherein said transport network signaling protocol is selected from a) a resource reservation protocol, RSVP, particularly RSVP-TE, and b) a label distribution protocol, LDP, particularly constraint-based label distribution protocol, CR-LDP.

4. Method according to one of the preceding claims, **characterized by** modifying at least one message of said protocol depending on the type of grid network resources to be reserved.

5. Method according to claim 4, **characterized in that** said step of modifying comprises adding one or more objects to said at least one message or messages which denote the type and/or further characteristics of the grid network resources to be reserved for said grid network application.

6. Method according to one of the preceding claims, **characterized in that** said transport network resources of said transport network (100) are reserved depending on the grid network resources which are to be reserved for said grid network application.

7. Method according to claim 6, **characterized in that** the usage of transport network resources is dynamically adapted during a grid network application session, in particular depending on current grid network application resource requirements.

8. Method according to one of the preceding claims, **characterized in that** state information related to a grid network member (120, 130) attached to said transport network (100) is distributed, in particular flooded, over said transport network (100).

9. Method according to claim 8, **characterized in that** said state information is stored in grid network members (120, 130) and/or further network elements of said transport network (100), particularly in routers (110a, 110b) of said .transport network (100).

10. Method according to one of the claims 8 to 9, **characterized by** extending an existing routing protocol, particularly an OSPF, open shortest path first, - based protocol in order to enable the distribution of said state information.

11. Network element (110a, 110b) of a transport network (100) configured to reserve transport network resources of said transport network (100) and grid network resources for a grid network application provided over said transport network (100) by using the same protocol.

12. Network element (110a, 110b) according to claim 11, **characterized by** being capable of performing the method according to one of the claims 1 to 10.

13. Transport network (100) comprising one or more network elements (110a, 110b) according to one of the claims 11 to 12.

## Patentansprüche

1. Verfahren zum Bereitstellen einer Gitternetzwerkanwendung über ein Transportnetzwerk (100), wobei Transportnetzwerkressourcen des besagten Transportnetzwerks (100) reserviert werden, insbesondere für den Transport von Daten zwischen Gitternetzwerkteilnehmern (120, 130), und wobei Gitternetzwerkressourcen für die besagte Gitternetzwerkanwendung reserviert werden, **gekennzeichnet durch** die Verwendung desselben Protokolls für den besagten Schritt des Reservierens von Transportnetzwerkressourcen und den besagten Schritt des Reservierens von Gitternetzwerkressourcen.

2. Verfahren nach Anspruch 1, **dadurch gekennzeichnet, dass** ein Transportnetzwerk-Signalisierungsprotokoll zum Reservieren der besagten Transportnetzwerkressourcen und der besagten Gitternetzwerkressourcen verwendet wird.

3. Verfahren nach Anspruch 2, wobei das besagte Transportnetzwerk-Signalisierungsprotokoll unter a) einem Ressourcenreservierungsprotokoll, RSVP, insbesondere RSVP-TE, und b) einem Labelverteilungsprotokoll, LDP, insbesondere einem einschränkungsbasierten Labelverteilungsprotokoll, CR-LDP, gewählt wird.

4. Verfahren nach einem der vorstehenden Ansprüche, **gekennzeichnet durch** das Modifizieren von mindestens einer Nachricht des besagten Protokolls in Abhängigkeit vom Typ der zu reservierenden Gitternetzwerkressourcen.

5. Verfahren nach Anspruch 4, **dadurch gekennzeichnet, dass** der besagte Schritt des Modifizierens das Hinzufügen von einem oder mehreren Objekten zu der besagten mindestens einen oder zu mehreren Nachrichten, welche den Typ und/oder weitere Eigenschaften der für die besagte Gitternetzwerkanwendung zu reservierenden Gitternetzwerkressourcen bezeichnen, umfasst.

6. Verfahren nach einem der vorstehenden Ansprüche, **dadurch gekennzeichnet, dass** die besagten Transportnetzwerkressourcen des besagten Transportnetzwerks (100) in Abhängigkeit von den für die besagte Gitternetzwerkanwendung zu reservierenden Gitternetzwerkressourcen reserviert werden.

7. Verfahren nach Anspruch 6, **dadurch gekennzeichnet, dass** die Verwendung von Transportnetzwerkressourcen während einer Gitternetzwerkanwendungssitzung dynamisch angepasst wird, insbesondere in Abhängigkeit von den aktuellen Gitternetzwerkanwendungsressourcen-Anforderungen.

8. Verfahren nach einem der vorstehenden Ansprüche, **dadurch gekennzeichnet, dass** die Zustandsinformationen, welche sich auf einen Gitternetzwerkteilnehmer (120, 130) des besagten Transportnetzwerks (100) beziehen, über das besagte Transportnetzwerk (100) verteilt, insbesondere geflutet, werden.

9. Verfahren nach Anspruch 8, **dadurch gekennzeichnet, dass** die besagten Zustandsinformationen in Gitternetzwerkteilnehmern (120, 130) und/oder weiteren Netzwerkelementen des besagten Transportnetzwerks (100), insbesondere in Routern (110a, 110b) des besagten Transportnetzwerks (100), gespeichert werden.

10. Verfahren nach einem der Ansprüche 8 bis 9, **gekennzeichnet durch** das Erweitern eines bestehenden Routing-Protokolls, insbesondere ein OSPF-basiertes, Open Shortest Path First, Protokoll, um das Verteilen der besagten Zustandsinformationen zu ermöglichen.

11. Netzwerkelement (110a, 110b) eines Transportnetzwerks (100), dafür konfiguriert, um über das besagte Transportnetzwerk (100) bereitgestellte Transportnetzwerkressourcen des besagten Transportnetzwerks (100) und Gitternetzwerkressourcen für eine Gitternetzwerkanwendung unter Verwendung desselben Protokolls zu reservieren.

12. Netzwerkelement (110a, 110b) nach Anspruch 11, **dadurch gekennzeichnet, dass** es fähig ist, das Verfahren nach einem der Ansprüche 1 bis 10 durchzuführen.

13. Transportnetzwerk (100) mit einem oder mehreren Netzwerkelementen (110a, 110b) gemäß einem der Ansprüche 11 bis 12.

## Revendications

1. Procédé de réalisation d'une application de réseau maillé sur un réseau de transport (100), les ressources de réseau de transport dudit réseau de transport (100) étant réservées, notamment pour le transport de données entre les éléments du réseau maillé (120, 130), et les ressources de réseau maillé de ladite application de réseau maillé étant réservées, **caractérisé par** l'utilisation du même protocole pour ladite étape de réservation des ressources du réseau de transport et ladite étape de réservation des ressources du réseau maillé.

2. Procédé selon la réalisation 1, **caractérisé en ce que** le protocole de signalisation de réseau de transport est utilisé pour la réservation desdites ressources du réseau de transport et desdites ressources du réseau maillé.

3. Procédé selon la revendication 2, ledit protocole de signalisation de réseau de transport étant choisi parmi a) un protocole de réservation de ressources, RSVP, notamment le RSVP-TE, et b) un protocole de distribution d'étiquette, LDP, notamment un protocole de distribution d'étiquette avec contraintes, CR-LDP.

4. Procédé selon l'une des revendications précédentes, **caractérisé par** la modification d'au moins un message dudit protocole en fonction du type de ressources de réseau maillé à réserver.

5. Procédé selon la revendication 4, **caractérisé en ce que** ladite étape de modification comprend l'ajout d'un ou plusieurs objets audit au moins un message ou aux messages, lesquels indiquent le type et/ou des caractéristiques supplémentaires des ressources de réseau maillé à réserver pour ladite application de réseau maillé.

6. Procédé selon l'une des revendications précédentes, **caractérisé en ce que** lesdites ressources de réseau de transport dudit réseau de transport (100) sont réservées en fonction des ressources de réseau maillé qui sont à réserver pour ladite application de réseau maillé.

7. Procédé selon la revendication 6, **caractérisé en ce que** l'utilisation des ressources du réseau de transport est adaptée dynamiquement pendant une session de l'application de réseau maillé, notamment en fonction des exigences actuelles des ressources de l'application de réseau maillé.

8. Procédé selon l'une des revendications précédentes, **caractérisé en ce que** les informations d'état en rapport avec un élément du réseau maillé (120, 130) connecté audit réseau de transport (100) sont distribuées, notamment propagées, sur ledit réseau de transport (100).

9. Procédé selon la revendication 8, **caractérisé en ce que** lesdites informations d'état sont stockées dans les éléments du réseau maillé (120, 130) et/ou d'autres éléments de réseau dudit réseau de transport (100), notamment dans des routeurs (110a, 110b) dudit réseau de transport (100).

10. Procédé selon l'une des revendications 8 à 9, **caractérisé par** l'extension d'un protocole de routage existant, notamment un protocole de type OSPF - open shortest path first (premier itinéraire ouvert le plus court) - afin de permettre la distribution desdites informations d'état.

11. Élément de réseau (110a, 110b) d'un réseau de transport (100) configuré pour réserver des ressources de réseau de transport dudit réseau de transport (100) et des ressources de réseau maillé pour une application de réseau maillé réalisé sur ledit réseau de transport (100) en employant le même protocole.

12. Élément de réseau (110a, 110b) selon la revendication 11, **caractérisé en ce qu'**il est en mesure de mettre en oeuvre le procédé selon l'une des revendications 1 à 10.

13. Réseau de transport (100) comprenant un ou plusieurs éléments de réseau (110a, 110b) selon l'une des revendications 11 à 12.
